# EUROPEAN PATENT SPECIFICATION

(11) **EP 3 678 804 B1**
(45) Date of publication and mention of the grant of the patent: **15.06.2022**
(21) Application number: 18778570.4
(22) Date of filing: 06.09.2018
(51) Int. Cl.: B22F 1/00, B22F 9/24, B01J 19/18

(54) **CONTINUOUS FLOW PRODUCTION OF METAL NANOWIRES**
HERSTELLUNG VON METALLNANODRÄHTEN MIT KONTINUIERLICHEM FLUSS
PRODUCTION EN FLUX CONTINU DE NANOFILS MÉTALLIQUES

(30) Priority: 06.09.2017 IN 201711031533
(43) Date of publication of application: 15.07.2020
(73) Proprietor: Council of Scientific and Industrial Research, New Delhi, Dehli 110 001 (IN)
(72) Inventor: KULKARNI, Amol Arvind, Pune Maharashtra 411 008 (IN); DESHPANDE, Jaydeep Bipin, Pune Maharashtra 411 008 (IN); KATE, Prachi Ashok, Pune Maharashtra 411 008 (IN)
(74) Representative: Hoffmann Eitle
(86) International application number: PCT/IN2018/050576
(87) International publication number: WO 2019/049172

(56) References cited:
- EP-A1- 1 803 497
- US-A1- 2008 034 921
- US-A1- 2012 207 644

## Description

### FIELD OF THE INVENTION

The present invention relates to a process for the preparation of various aspect ratios of metal nanorods and nanowires in a continuous manner by using a continuous stirred tank reactor (CSTRs) in series which recycles and reuses the unreacted reactants in the continuous reactor loop.

### BACKGROUND AND PRIOR ART OF THE INVENTION

The polyol synthesis route for silver nanowires is the most popular method for synthesis. In this method, ethylene glycol acts as both the medium and reducing agent for silver ions (0.01-0.1 M) at higher temperatures (110-180°C) in presence of oxidative etching carried out by a halide compound. Glycol is oxidised to acetaldehyde and later to diacetyl. In the initial stages twinned seeds of silver are formed which later grow along the 220 or 111 plane forming pentagonal silver nanowires. Some nanowire preparation methods are representations of a rapid polyol synthesis (reacting time of 15 - 20 min) of silver nanowires. Other investigators used comparatively lower silver concentration, lower temperatures or both and thus extended the reaction time to 1-1.5 hr. Various molecular weights of PVP and Ag:PVP ratios have also been studied. While using the same molecular weight of PVP, initial silver concentration and similar residence times, different investigators observed different results. Coskun et al in Crystal Growth & Design 2011, 11, 4963 demonstrated higher temperatures (from 130 to 170°C) and a Ag:PVP weight ratio of 0.2 as favourable to produce longer wires, while Bergin et al in Nanoscale 2012, 4, 1996 showed successively lower temperatures (from 160 °C to 130 °C) at a Ag:PVP ratio of 1 produced longer and longer wires. However at a Ag:PVP ratio of 1, some workers observed low aspect ratio nanowires irrespective of temperature. In their experiments, as also in the experiments of Cheng et al in Chinese Journal of Chemistry 2015, 33, 147, lowering the Ag:PVP ratio slightly increased the aspect ratio.

US8597397B2 discloses a process for the production of metal nanoparticles. In one aspect, the invention is to a process comprising the steps of mixing a heated first solution comprising a base and/or a reducing agent (e.g., a non-polyol reducing agent), a polyol, and a polymer of vinyl pyrrolidone with a second solution comprising a metal precursor that is capable of being reduced to a metal by the polyol. In another aspect, the invention is to a process that includes the steps of heating a powder of a polymer of vinyl pyrrolidone; forming a first solution comprising the powder and a polyol; and mixing the first solution with a second solution comprising a metal precursor capable of being reduced to a metal by the polyol, wherein at least about 90% of the nanoparticles have a diameter of not more than about 75 nm.

US2010242679 discloses a method for continuously fabricating silver nanowires. The method mixes a glycol solution of a silver salt and a glycol solution of a polyvinyl pyrrolidone, and the mixed solution reacts in a temperature range and a time range to form the silver nanowires. The polyvinyl pyrrolidone has high boiling point and reduction ability so as to reduce the silver salt to the silver nanoparticles, and simultaneously, the polyvinyl pyrrolidone can provide barriers for limiting the particle growth. Besides, the oxygen functional groups on the long chains of the polyvinyl pyrrolidone can keep the stably one-dimensional growth of the silver nanoparticles to form the silver nanowires during the aging process. However in this prior art the reactants are have not continuously fed and removed the reactants, they feed the reactants in reaction tank allowed for specific staying duration and then the product from reaction tank was completely fed to the aging tank for second staying period. Secondly, the particles from the mixed solution formed in reaction tank were separate and then the solution is fed to aging tank. The resulting product nanowires do not have aspect ratio beyond 100. Moreover the invention does not use any nucleating/etching agent like chloride/bromide ions.

Article titled "The effect of agitation state on polyol synthesis of silver nanowire" by Amirjani et al.published in International Nano Letters; March 2016, Volume 6, Issue 1, pp 41-44 reports the effect of agitation rate on the growth mechanism of silver nanowires is evaluated during polyol process. It was found that increasing the agitation rate leads to the increase in the oxygen transfer rate which in turn enhances the oxidative etching conditions leading to the formation of a variety of nanostructures (nanoparticles, nanorods and nanowires). In light of the obtained experimental results, it can be stated that agitation is not essential for synthesizing silver nanowires by polyol method and it is possible to obtain uniform nanowires with -200 nm diameters in the length of 20-30 microns several microns length in the stagnant condition. By setting the stirring rate at 200 rpm, it is possible to reduce the nanowires diameters to ~130 nm and the obtained nanostructures are still mono-dispersed.

Article titled "Salt-mediated polyol synthesis of silver nanowires in a continuous-flow tubular reactor" by KS Chou et al. published in RSC Adv., 2015,5, 29872-29877 reports a process for the synthesis of silver nanowires by a polyol reduction method in a continuous-flow reactor. The effects of process parameters on the conversion, selectivity, and morphology of silver nanowires are analyzed. Experimental results reveal that sufficient space time, low reaction temperature, and a moderate molar ratio of polyvinylpyrrolidone (PVP) to silver ions can result in high conversion (97.16%) and selectivity (near 100%). The yield can reach 2 g h⁻¹ and the resulting AgNWs have an average length of 22 µm and diameter of 90 nm. It is found that the length of the AgNWs can be adjusted by varying the initial concentration of silver ions and the PVP amount, and the diameter can be reduced with increasing concentration of potassium chloride. However this method has a limitation of wall adhesion and eventual clogging of tubes and thus would pose restriction in operating it for long time.

US8551211B2 discloses a method for continuously growing silver nanowires comprising: feeding at least one first composition comprising at least one reducible metal ion, at least one tin ion, and at least one protecting agent to the contents of at least one continuous-flow reactor comprising at least one tubular reactor, the at least one reducible ion comprising at least one silver ion; heating the at least one first composition prior to reducing the at least one reducible metal ion to at least one metal nanowire; and withdrawing at least one second composition comprising the at least one metal nanowire from the contents of the at least one continuous-flow reactor, wherein the reduction is performed in the presence of at least one tin ion or atom. This approach tries to include a wide range of reactor possibilities without specifying any sequence or reason relevant to the specific stage of the reactio and thus does not lead to any workable approach. Product quality reported is not that good thick and short rods are claimed and yield not mentioned. However since this prior art mentions about the use of at least one tubular reactor, it has a limitation of wall adhesion and eventual clogging of tube(s) and thus poses restriction in operating it for long time.

US9776249B2 discloses a process for manufacturing silver nanowires is provided, wherein the recovered silver nanowires have a high aspect ratio; and, wherein the total glycol concentration is <0.001 wt % at all times during the process. The silver nanowires produced are having the plurality of high aspect ratio silver nanowires recovered have an average diameter of 25 to 80 nm and an average length of 10 to 100 µm. This batch method having longer reaction time gives a wider diameter range of wires from any specific experiments.

Various literature reports have cited the importance of stirring rate in nanowire aspect ratio. Researchers have suggested that the mixing rate be reduced as much as possible in order to decrease the nucleation rate and showed that ultra-long nanowires of 1000 aspect ratio could be synthesized at silver:PVP ratio of 1 with this modification. In comparison, in presence of good mixing nanowires in the range of 200-300 aspect ratio was formed. Higher nanowire aspect ratios were observed when the reactor volume increased. From these observations it seems that mixing has a significant effect on the aspect ratio. Mixing inside the reactor is dependent on various parameters like viscosity of solvent, volume of reaction flask and reaction volume, and stirring rpm. Since the reaction products except silver nanowires/nanoparticles (namely acetaldehyde, nitric acid, water and biacetyl) are all gaseous at the reaction temperature, gas:liquid ratio in the reactor increases as a function of time with an increase in reaction mixture viscosity with time. This implies that the amount of gas that gets redissolved into the liquid varies depending upon the pressure inside the reaction vessel, which is a function of the unfilled volume (headspace) of the reactor. This particular aspect plays an important role on the quality of Ag nanowires as well as the aspect ratio. None of the above complications have been addressed anywhere in the literature thus giving rise to poor reproducibility and conflicting results. As suggested by researchers, reducing nucleation and favouring growth may help in creating longer nanowires. However, no kinetic data is available for this reaction.

Therefore, there is need for a cost effective continuous flow process for the synthesis of metal nanowires which can produce longer nanowires in effective manner. Accordingly, the present invention provides an efficient, continuous flow process for the synthesis of metal nanowires of varying aspect ratio.

### OBJECTS OF THE INVENTION

The main objective of the present invention is to provide an efficient, continuous flow synthesis protocol for the synthesis of metal nanowires and nanorods of higher aspect ratios at high throughput in continuous flow manner without modifying the stoichiometry of the polyol reaction protocol.

Another objective of the invention is to provide a tunable process for the synthesis of silver nanowires, wherein the process is tunable to obtain nanowires with desired aspect ratios of nanowires with a strict control on the nanowire diameter.

### SUMMARY OF THE INVENTION

Accordingly, the present invention provides a continuous flow process for the synthesis of metal nanowires using continuous stirred tank reactors (CSTRs) in series according to the accompanying claims.

### BRIEF DESCRIPTION OF DRAWINGS:

Figure 1: Synthesis in test reactions (1), (2), (3) and (4)
Figure 2: Variation in (a) absorbance of nanoparticles created in the reaction and (b) weight of nanowire product created in the reaction
Fig 3: Nucleation of nanoparticles in batch vs CSTRs in series
Figure 4: Twinned silver nanoparticle (a) TEM images and (b) SAED spectra of the monocrystalline particle.(c) Growing silver nanorod with prismatic edges (d) Full length nanowires with prismatic edges

### DETAILED DESCRIPTION OF THE INVENTION:

The present invention will now be described in preferred as well as optional embodiments so that the various aspects disclosed therein will be more clearly understood and appreciated. The present invention provides a continuous flow synthesis of metal nanowires using an axially mixed reactor or a recycle based reactor, wherein the axial dispersion helps promoting growth over nucleation without affecting the reaction time, leading to the production of metal nanowires and nano rods of increased length at high throughputs.

In an embodiment, the present invention provides a continuous flow process for the synthesis of silver nanowires using continuous stirred tank reactors (CSTRs) in series comprising:
a) dissolving metal salt in ethylene glycol to obtain solution A and dis an alkali halide, or a chloride, bromide, or iodide salt of copper or iron in ethylene glycol to obtain solution B in different reagent preparation tanks;
b) introducing solution A and B to the first continuous stirred tank reactor (CSTR) in series and stirring at 200-1000 rpm at temperature in the range of 110-180°C to obtain metal nuclei;
c) feeding the outflow from the first CSTR of step (b) to the next CSTR in series;
d) optionally adding a capping agent to the CSTRs-in-series either entirely in the first CSTR or distribute it across various CSTRs in series in equal or different proportions and stirring the reaction mixture at 200-1000 rpm at temperature in the range of 110-180°C for period ranging from 10 minutes to 12 hours in each CSTR and adding antisolvent to the last CSTR in the series to obtain the metal nanowires continuously

In preferred embodiment, the diameter of metal nanowire is in the range of 100 to 200 nm and length of said metal nanowire is in the range of 4 to 20 µm.

The metal salt is silver nitrate and the alkali halide is selected from chloride, bromide and iodide salts of sodium, potassium.

In an embodiment of the invention, the reactor headspace is varied from 10% to 99% of the reactor volume. In a preferred embodiment, the head space of all the reactors in series are kept identical or varied individually between 10% to 90% to control the growth.

In one more embodiment, an antisolvent selected from chloroform, acetone or mixture thereof is added to precipitate the nanowires with or without dissolution of the capping agent. In another embodiment, the invention provides a tunable process for the synthesis of silver nanowires with high aspect ratio. The silver salt concentration ranges from centimolar to decimolar with nanowire aspect ratios increasing as the concentration decreases. The silver salt is dispersed in an ethylene glycol which can reduce the salt to twinned nanoparticles essential for formation of silver nanowires.

In one embodiment, the capping agent is a polymeric stabilizer (preferably polyvinyl pyrrolidone ie PVP) of varying molecular weights (40,000-1300,000) is selected for capping the long nanowires. In a preferred embodiment, the preferred molecular weights are 40,000 to 360,000.

The temperature of the reaction is varied between 110-160°C.

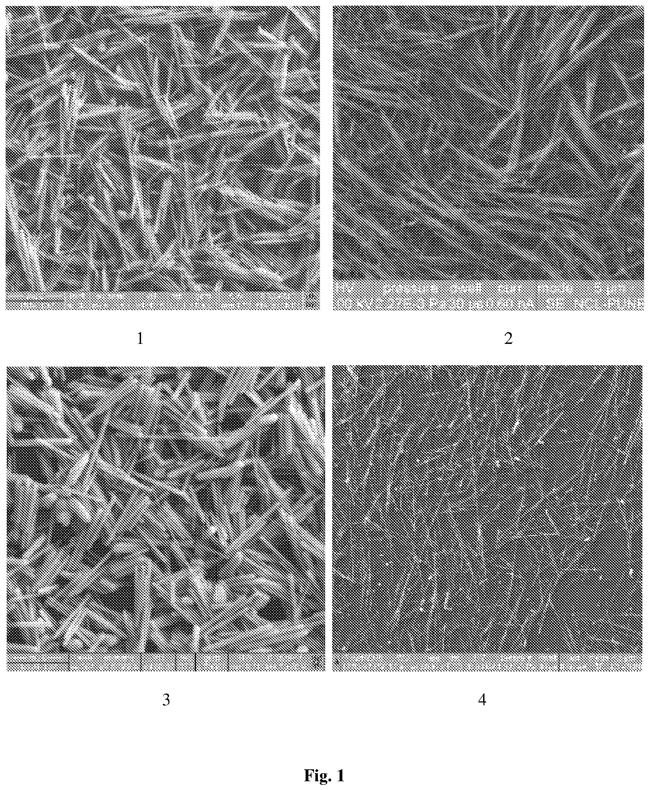

In a test reaction 1, preparation of silver nanowires comprised adding 0.3 M silver salt, ~ 1 mM NaCl, 0.45 M PVP (40,000 molecular weight) at 160°C. The batch reaction volume is 40 ml. Reaction completion took place in ~9 min and the resulting nanowires had a diameter of 200 nm and a length of 4 microns (aspect ratio of 20), refer Figure 1 (1).

Two more experiments are carried out at 40 ml batch reaction volume using 0.1 M silver salt, ~ 1 mM NaCl, 0.45 M PVP (40,000 molecular weight) at 160°C in test reaction 2 and 0.3 M silver salt, ~ 1 mM NaCl, 0.45 M PVP (40,000 molecular weight) at 140°C in test reaction 3. The reactions are completed at ~ 120 min and ~ 45 min respectively with the nanowires having diameters ~ 110 nm and 200 nm respectively and the lengths of wires are ~ 10 microns and ~ 5 microns respectively. Thus, lower metal ion concentration increased the nanowire aspect ratio from ~ 20 to -120 while increasing the reaction time to more than 10 times as compared to the test reaction 1. The throughput from the reactor is hence decreased significantly to achieve longer reaction time to have sufficient time that leads to formation of longer nanowires, refer figures (2) and (3).

A fourth experiment consisted of silver nanowires synthesized in batch of 40 ml volume with 0.3 M total silver concentration, ~ 1 mM NaCl, 0.45 M PVP (40,000 MW) and 160°C wherein the metal precursor is added over a span of 10 mins. The reaction is found completed in 15 mins with the resultant nanowires having diameter ~ 110 nm and length of ~ 12 microns. Thus, addition of metal ion over time increased the nanowire aspect ratio from ~ 20 to ~ 110 by increasing the reaction time to only 1.5 times the time for the test reaction (1). The comparison between all the 4 samples is shown in Figure 1.

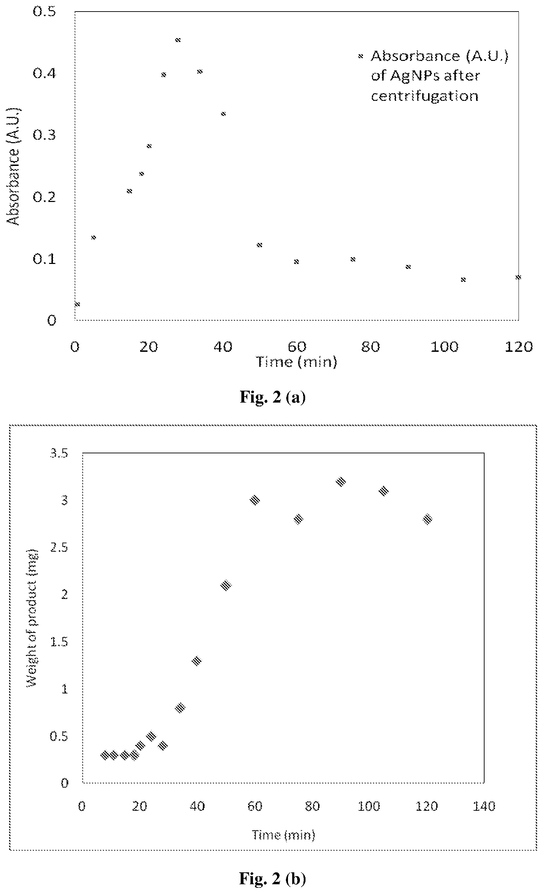

Solid state transformation from metal ions to metal nanowires includes first the rapid process of homogeneous nucleation of twinned nanoparticles resulting from the reduction of metal ion to metal atoms which supersaturate the reaction media. The growth of nanorods/wires occurs by heterogeneous reduction on the surface of these twinned particles. Since the silver nanoparticles show absorbance under UV-Vis spectroscopy, the creation of nanoparticles and their loss due to transformation to nanorods can be monitored. For this purpose samples are collected from the reaction mixture over time. Since nanowires have a much larger mass than nanoparticles they were separated from the nanoparticles using centrifugation. The corresponding graph (Figure 2a) shows an initial increase in nanoparticle concentration due to rapid nucleation. As the reaction proceeds beyond 30 mins the nanoparticles get converted to nanowires resulting in a drop in total AgNP concentration. The corresponding increase in the weight of silver nanowires can be observed by measuring the weight of the centrifuge (Figure 2b).

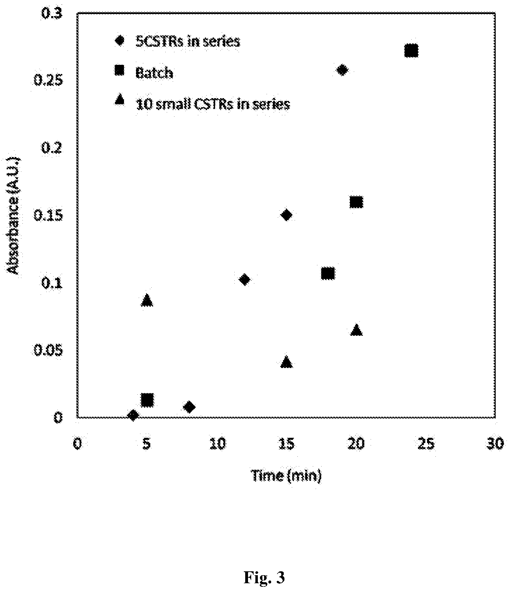

Figure 3 shows that the nucleation in CSTRs in series is equivalent if not slightly faster compared to nucleation in batch when 5 CSTRs in series are used. When a reactor resembling 10 small CSTRs in series is used nucleation slowed down implying the role of optimal mixing in the reaction. In order to create silver nanowires of high aspect ratio, this nucleation must be slowed down and growth must be preferred. This can be accomplished in two ways.
(A) Nucleation and growth represent a series parallel scheme with the former as the faster reaction. Hence lower metal ion concentration and/or lower temperature suppress nucleation and favours growth. In the case of Example (2), nucleation is suppressed by decreasing temperature or reaction concentration. However, the throughputs decreased by over 10 times.
(B) Deliberate slow addition of the metal precursor over time/ recycling fluid packets over the reactor length create a moderate metal ion concentration in the initial part of the reactor as an effect of axial mixing which suppresses the nucleation and increases the reaction time. The remaining metal ions react during the latter stages of the reaction inducing growth and maintaining the throughput. In the preferred embodiment (Example 4), the metal precursor is mixed over time resulting in preferred growth with little decrease in the throughput.

Therefore, in another embodiment of this invention, Solution (B) may be applied to continuous flow systems having multipoint dosing and also by recycling of fluid packets. The degree of back mixing or recycling may be varied by varying the number of tanks. Accordingly, silver nanowires are synthesized (Example 5) in 2 CSTRs-in-series at 0.3 M total silver concentration, ~ 1 mM NaCl, 0.45 M PVP (40,000 MW) and 160°C generating a nanowire diameter of ~ 120 nm and a length above 15 microns.

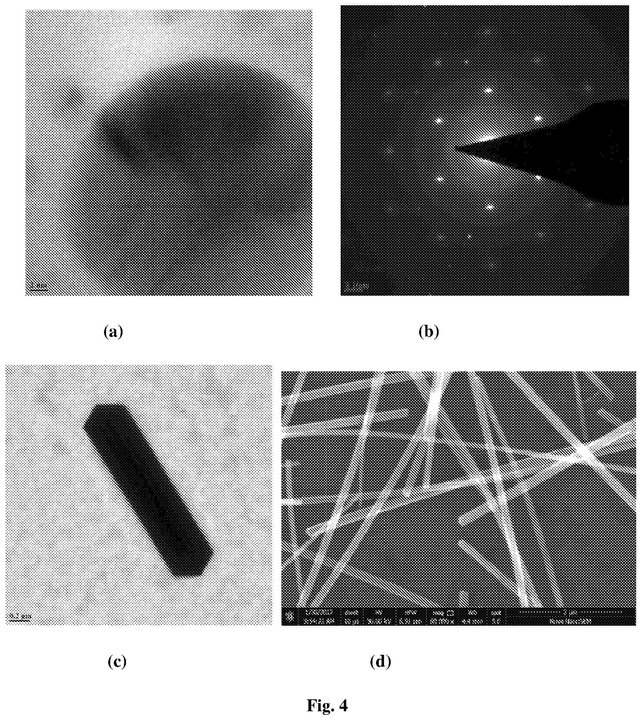

The nucleation of twinned pentagonal prismatic particles growing into monocrystalline pentagonal nanorods/wires is confirmed through small angle electron diffraction or SAED (Figure 4).

The dislcosed protocol that takes into account the various complications through detailed kinetic modelling and affixes values of temperature, reactor headspace, stirring rate and residence time in order to achieve reproducible synthesis of metal nano forms with complete conversion and/or recyclability of reagents along with a method to separate these nanoforms.

Following examples are given by way of illustration therefore should not be construed to limit the scope of the invention.

### Example 1: Increasing nanowire lengths in batch reactor (comparative example):

A round bottom flask of 100 ml was filled with 36 ml of ethylene glycol solution containing a chloride ion concentration of ~1 mM. 2 g of polyvinyl pyrrolidone (40,000 MW) were added and the reaction mixture stirred and heated upto 160 ⁰C using an oil bath and magnetic stirrer. The stirrer rotation was set to 500 rpm and the temperature was maintained steadily at 160°C. A solution of 4 g of silver nitrate in 8 ml of ethylene glycol was prepared and was added to the reactor over a period of 10 mins and the reactants were allowed to react for 5 more mins. At this time silverfish-white streaks were observed in the reaction mixture signifying the presence of nanowires. The reaction mixture was allowed to cool down and was mixed with 120 ml acetone causing immediate precipitation of the nanowires. The nanowires were washed with methanol thrice and resuspended in water. The nanowires were analysed under SEM and were observed to have a diameter of 110 nm and ~ 12 microns length. AAS analysis of the supernatant confirmed that complete conversion of silver ions was obtained. The acetone in the supernatant was distilled out leaving a solution of the stabilizer (PVP) in ethylene glycol. This solution could be recycled and reused for synthesizing nanowires.

### Example 2: Effect of temperature and concentration (comparative example):

A round bottom flask of 100 ml was filled with 36 ml of ethylene glycol solution containing a chloride ion concentration of ~1 mM. 0.5 g of polyvinyl pyrrolidone (360000 MW) were added and the reaction mixture stirred and heated upto 140°C using an oil bath and magnetic stirrer. The stirrer rotation was set to 500 rpm and the temperature was maintained at 140°C. A solution of 0.32 g of silver nitrate in 8 ml of ethylene glycol was prepared and added to the reactor for 10 mins. The reactants were allowed to react for 50 more mins. At this time silverish-white streaks were observed in the reaction mixture signifying the presence of nanowires. The reaction mixture was allowed to cool down and was mixed with 120 ml acetone causing immediate precipitation of the nanowires. The nanowires were washed with methanol thrice and resuspended into water based dispersion. The nanowires were analysed under SEM and were observed to have a diameter of 60 nm and ~ 10 microns length. AAS analysis of the supernatant confirmed that complete conversion of silver ions was obtained. The acetone in the supernatant was distilled out leaving a solution of the stabilizer (PVP) in ethylene glycol. This solution could be recycled and reused for synthesizing nanowires.

### Example 3: Effect of mixing (comparative example)

A round bottom flask of 100 ml was filled with 18 ml of ethylene glycol solution containing a chloride ion concentration of ~1 mM. 1 g of polyvinyl pyrrolidone (360000) were added and the reaction mixture stirred and heated upto 140°C using an oil bath and magnetic stirrer. The stirrer rotation was set to 1000 rpm and the temperature was maintained steadily at 140°C. A solution of 0.16 g of silver nitrate in 8 ml of ethylene glycol was prepared and added to the reactor over a period of 5 seconds and was allowed to react for an hour. At this time silverfish-white streaks were observed in the reaction mixture signifying the presence of nanowires. The reaction mixture was allowed to cool down and was mixed with 100 ml acetone causing immediate precipitation of the nanowires. The nanowires were washed with methanol thrice and resuspended in water. The nanowires were analysed under SEM and were observed to have a diameter of -45 nm and ~ 20 microns length. The conversion of silver ions was -70%. The acetone in the supernatant was distilled out leaving the silver ions and stabilizer in ethylene glycol. This solution could be recycled and reused for synthesizing nanowires.

### Example 4: Effect of chloride ion (comparative example)

A round bottom flask of 100 ml was filled with 36 ml of ethylene glycol solution containing a chloride ion concentration of -0.2 mM. 0.5 g of polyvinyl pyrrolidone (360000 MW) were added and the reaction mixture stirred and heated upto 140°C using an oil bath and magnetic stirrer. The stirrer rotation was set to 500 rpm and the temperature was maintained steadily at 140°C. A solution of 0.32 g of silver nitrate in 8 ml of ethylene glycol was prepared and added to the reactor over a period of 5 s and was allowed to react for a period of 1 hour. At this time silverish-white streaks were observed in the reaction mixture signifying the presence of nanowires. The reaction mixture was allowed to cool down and was mixed with 120 ml acetone causing immediate precipitation of the nanowires. The nanowires were washed with methanol thrice and resuspended in water. The nanowires were analysed under SEM and were observed to have a diameter of 60 nm and ~ 2 microns length. AAS analysis of the supernatant confirmed that complete conversion of silver ions was obtained. The acetone in the supernatant was distilled out leaving a solution of the stabilizer (PVP) in ethylene glycol. This solution could be recycled and reused for synthesizing nanowires.

### Example 5: Synthesis in CSTRs-in-series

2 jacketed baffled CSTRs of 50 ml volume each were connected in series with counter current flow inside the heating jackets. The CSTRs were maintained at 160°C and were stirred using overhead stirrers at 500 rpm. 0.45 M polyvinyl pyrrolidone or PVP (40,000 MW) solution in ethylene glycol with a chloride ion concentration of 1 mM was preheated to 140°C and pumped into the first CSTR at 6 ml/min by means of a peristaltic pump (Longer Pumps). 3 M silver nitrate solution in ethylene glycol was also pumped into first CSTR at 1.67 ml/min using a syringe pump. The contents from the second CSTR overflowed into a collection vessel where they were quenched. The total residence time was 15 mins. The reagents in the first CSTR were recycled and held inside the CSTR for extended periods before being dosed towards the next CSTR thus causing the formed silver nanowires to keep reacting with the fresh feed and continue growing into longer and longer wires. The reaction reached completion inside the second CSTR. The collected slurry was added to acetone in 3:1 ratio (acetone: slurry v/v) to precipitate the nanowires. The nanowires were subsequently washed with methanol thrice. SEM analysis showed the nanowires had a diameter of ~ 150 nm and length of ~ 20 microns which was better than the aspect ratio obtained at lower temperatures and lower concentrations. Atomic absorption spectroscopy (AAS) analysis of the supernatant confirmed that complete conversion of silver ions was obtained. The acetone in the supernatant was distilled out leaving a solution of the stabilizer (PVP) in ethylene glycol. This solution could be recycled and reused for synthesizing nanowires.

### Example 6: Synthesis in continuous flow tubular reactor

Two solutions were prepared. The first solution contained 0.45 M polyvinyl pyrrolidone (40,000 MW) solution in ethylene glycol with a chloride ion concentration of 1 mM maintained at 140°C. The second solution contained 3 M silver nitrate solution at room temperature. Both solutions were pumped continuously while maintaining insulation and contacted in a tee-junction leading to a jacketed glass coil. The jacketed glass coil has 3 mm inner diameter, 5 cm coil diameter, 50 ml volume and was pre-filled with a thick viscous liquid soya oil while being maintained at 160°C. Soya oil and the ethylene glycol mixture were injected in 1:1 volume ratio into the glass coil while maintaining a residence time of 15 mins. The collected slurry was decanted and the bottom layer (glycol layer) was separated by gravity at ambient conditions in a few minutes. The bottom layer was added to acetone in 3:1 ratio (acetone: slurry v/v) to precipitate the nanowires. The nanowires were subsequently washed with methanol thrice. SEM analysis showed the nanowires had a diameter of ~ 150 nm and length of ~ 12 microns. AAS analysis of the supernatant confirmed that complete conversion of silver ions was obtained. The acetone in the supernatant was distilled out leaving a solution of the stabilizer (PVP) in ethylene glycol. This solution could be recycled and reused for synthesizing nanowires.

**Example 7:** A series of 7 baffled jacketed CSTRs was used and reaction temperature of 140°C was achieved by external circulation of thermal fluid. First 4 CSTRs were of 60 ml volume followed by 2 CSTR of 150 ml and last CSTR of 450 ml. 0.065 M Polyvinyl pyrrolidone (PVP molecular weight- 360000) in ethylene glycol was mixed with ethylene glycol solution containing 0.23 mM chloride ions in volumetric ratio 8.8:1 to prepare solution A. The solution A was then preheated to 120°C and was pumped to the first CSTR at 5 ml/min flow rate with the help of peristaltic pump. Solution B was 0.35 M silver nitrate (AgNO₃) in ethylene glycol and was injected into the first CSTR by using syringe pump at flow rate of 0.612 ml/min. The reaction mixture was stirred at 450-500 rpm in each CSTR. The outflow from each CSTR was fed to the next CSTR with the help of peristaltic pump. Total residence time in the CSTRs was 180 min and conversion was ~76% which was analyzed in Atomic Absorption Spectrophotometer AAS. The product from last CSTR was quenched to room temperature and silver nanowires were precipitated out by adding 5-6 times volume of acetone antisolvent. The precipitated nanowires were washed 2-3 times with ethanol to remove excess PVP and were finally dispersed in water. SEM images of AgNWs showed that the nanowires were of diameter 190±50 nm and length 27±13 µm.

**Example 8:** Using the experimental set-up from Example 7, the chloride ion concentration was changed to 0.31 mM. Rest of the parameters were retained as in Example 7. The conversion was found to be ~78% which was analyzed in Atomic Absorption Spectrophotometer AAS and the nanowires were of diameter 150±40 nm and length 38±15.5 µm.

**Example 9:** Using the experimental set-up from Example 7, the chloride ion concentration was changed to 0.35 mM. Rest of the parameters were retained as in Example 7. The conversion was found to be ~73% which was analyzed in Atomic Absorption Spectrophotometer AAS and the nanowires were of diameter 350±150 nm and length 50±25 µm.

**Example 10:** In this experiment the volume of CSTRs used for growth was decreased to 450 ml which was 750 ml in earlier cases. 0.065 M Polyvinyl pyrrolidone (PVP molecular weight- 360000) in ethylene glycol was mixed with ethylene glycol solution containing 0.23 mM chloride ions in volumetric ratio 8.8: 1 to prepare solution A. The solution A was then preheated to 120°C and was pumped to the first CSTR at 3.6 ml/min flow rate with the help of peristaltic pump. Solution B was 0.35 M silver nitrate (AgNO₃) in ethylene glycol and was injected into the first CSTR by using syringe pump at flow rate of 0.44 ml/min. With 180 min residence time, the conversion of silver nitrate was ~81% and the nanowires were of diameter 75±20 nm and length 35±5.5µm.

**Example 11:** The experimental set-up was kept same as given in Example 10. The AgNO₃ concentration was reduced to 0.32 M while rest of the experimental conditions were kept same as Example 10. For a total residence time of 180 min, the conversion was ~87% and the nanowires diameter was reduced to 60±5 nm and length 60±25µm. It also resulted in formation of thick nanorods of diameter ~200±50 nm.

### Advantages of the invention:

1. The present invention provides a synthesis protocol that takes into account the various complications through detailed kinetic modelling and affixes values of temperature, reactor headspace, stirring rate and residence time in order to achieve reproducible synthesis of nanowires with complete conversion and/or recyclability of reagents along with a method to separate these nanowires.
2. Complete conversion of metal to nano wires
3. Complete recyclability of reactants and solvents
4. Tunable for desired diameter and aspect ratio

## Claims

1. A continuous flow process for the synthesis of metal nanowires using continuous stirred tank reactors (CSTRs) comprising:
a. dissolving metal salt in ethylene glycol to obtain solution A and dissolving an alkali halide or a chloride, bromide or iodide salt of copper or iron in ethylene glycol to obtain solution B in different reagent preparation tanks;
b. introducing solution A and B to the first continuous stirred tank reactor (CSTR) in series and stirring at 200-1000 rpm at temperature in the range of 110-180°C to obtain metal nuclei;
c. feeding the outflow from the first CSTR of step (b) to the next CSTR in series;
d. optionally adding a capping agent to the CSTRs-in-series either entirely in the first CSTR or distribute it across various CSTRs in series in equal or different proportions and stirring the reaction mixture at 200-1000 rpm at temperature in the range of 110-180°C for period ranging from 10 minutes to 12 hours in each CSTR and
e. adding antisolvent to the last CSTR in the series to obtain the metal nanowires continuously,
wherein said metal is silver.

2. The process as claimed in claim 1, wherein said metal salt is silver nitrate.

3. The process as claimed in claim 1, wherein said alkali halide is selected from the group consisting of chloride, bromide and iodide salts of sodium and potassium.

4. The process as claimed in claim 1, wherein the solvent is continuously separated from the antisolvent and fed back to the reagent preparation tank before the first CSTR and the recovered antisolvent is fed back to the inlet of the last CSTR.

5. The process as claimed in claim 1, wherein said capping agent is polyvinyl pyrrolidone of varying molecular weights in the range of 40,000 to 1300,000.

6. The process as claimed in claim 1, wherein the number of CSTRs-in-series is in the range from 2 to 7.

7. The process as claimed in claim 1, wherein the head space of all CSTRs-in-series are kept identical or varied individually between 10% to 99%, preferably 10% to 90% of the reactor volume to control the growth.

8. The process as claimed in claim 1, wherein said antisolvent is selected from chloroform, acetone or mixture thereof.

9. The process as claimed in claim 1, wherein the diameter of the metal nanowire is in the range of 100 to 200 nm.

10. The process as claimed in claim 1, wherein the length of the metal nanowire is in the range of 4 to 20 µm.

11. The process as claimed in claim 1, wherein the head spaces of all the CSTRs are connected.

## Patentansprüche

1. Kontinuierlicher Flussprozess zur Synthese von Metall-Nanodrähten unter Verwendung von Rührkesselreaktoren (continuous stirred tank reactors, CSTRs), der die folgenden Schritte umfasst:
a) Auflösen von Metallsalz in Ethylenglykol, um so eine Lösung A zu erhalten, und Auflösen eines Alkalihalogenids oder eines Chlorid-, Bromid- oder Iodidsalzes von Kupfer oder Eisen in Ethylenglykol, um so eine Lösung B zu erhalten, in unterschiedlichen Reagenzherstellungstanks;
b) Einleiten von Lösung A und B in den ersten Rührkesselreaktor (CSTR) in Reihe und Rühren bei 200-1.000 U/min bei einer Temperatur im Bereich von 110-180°C, um so Metallkeime zu erhalten;
c) Zufuhr des Ablaufs aus dem ersten CSTR von Schritt (b) zu dem nächsten CSTR in Reihe;
d) optionale Zugabe eines Maskiermittels (capping agent) zu den CSTRs in Reihe entweder vollständig zu dem ersten CSTR oder verteilt über mehrere CSTRs in Reihe in gleichen oder unterschiedlichen Anteilen und Rühren der Reaktionsmischung bei 200 bis 1.000 U/min bei einer Temperatur im Bereich von 110-180°C für einen Zeitraum von 10 Minuten bis 12 Stunden in jedem CSTR und
e) Zugabe von Antisolvens zu dem letzten CSTR in der Reihe, um so die Metall-Nanodrähte kontinuierlich zu erhalten,
wobei das Metall Silber ist.

2. Prozess gemäß Anspruch 1, bei dem das Metallsalz Silbernitrat ist.

3. Prozess gemäß Anspruch 1, bei dem das Alkalihalogenid ausgewählt ist aus der Gruppe, bestehend aus Chlorid-, Bromid- und Iodidsalzen von Natrium und Kalium.

4. Prozess gemäß Anspruch 1, bei dem das Lösungsmittel kontinuierlich von dem Antisolvens abgetrennt wird und zu dem Reagenzherstellungstank vor dem ersten CSTR rückgeführt wird und das wiedergewonnene Antisolvens zu dem Einlass des letzten CSTR rückgeführt wird.

5. Prozess gemäß Anspruch 1, bei dem das Maskiermittel Polyvinylpyrrolidon mit unterschiedlichen Molekulargewichten im Bereich von 40.000 bis 1.300.000 ist.

6. Prozess gemäß Anspruch 1, bei dem die Anzahl der CSTRs in Reihe im Bereich von 2 bis 7 ist.

7. Prozess gemäß Anspruch 1, bei dem der Head-Space aller CSTRs in Reihe gleich gehalten oder individuell zwischen 10 % bis 99 %, vorzugsweise 10 % bis 90 % des Reaktorvolumens variiert wird, um das Wachstum zu steuern.

8. Prozess gemäß Anspruch 1, bei dem das Antisolvens ausgewählt ist aus Chloroform, Aceton oder einer Mischung davon.

9. Prozess gemäß Anspruch 1, bei dem der Durchmesser des Metall-Nanodrahts im Bereich von 100 bis 200 nm liegt.

10. Prozess gemäß Anspruch 1, bei dem die Länge des Metall-Nanodrahts im Bereich von 4 bis 20 µm liegt.

11. Prozess gemäß Anspruch 1, bei dem die Head-Spaces aller CSTRs verbunden sind.

## Revendications

1. Procédé d'écoulement continu pour la synthèse de nanofils métalliques à l'aide d'un réacteur à fonctionnement continu (CSTR) comprenant :
a. la dissolution d'un sel métallique dans de l'éthylène glycol pour obtenir une solution A et la dissolution d'un halogénure alcalin ou d'un chloride, bromide ou un sel d'iode de cuivre ou de fer dans de l'éthylène glycol pour obtenir une solution B dans différents réservoirs de préparation à réactif ;
b. l'introduction d'une solution A et B au réacteur à fonctionnement continu (CSTR) en série et le mélange à 200-1 000 tr/m à une température dans la plage de 110-180 °C pour obtenir des nucléus métalliques ;
c. la fourniture de l'écoulement du premier CSTR de l'étape (b) au CSTR suivant en série ;
d. l'ajout facultatif d'un agent d'étanchéité aux CSTR en série soit entièrement dans le premier CSTR ou en le distribuant dans divers CSTR en série dans des proportions égales ou différentes et le mélange du mélange réactionnel à 200-1000 tr/min à une température dans la plage de 110-180 °C pendant une période allant de 10 minutes à 12 heures dans chaque CSTR et
e. l'ajout d'un antisolvant au dernier CSTR dans la série pour obtenir les nanofils métallique de façon continue,
dans lequel ledit métal est de l'argent.

2. Procédé selon la revendication 1, dans lequel ledit sel métallique est du nitrate d'argent.

3. Procédé selon la revendication 1, dans lequel ledit halogénure alcalin est choisi dans le groupe consistant en chloride, bromide et sels d'iode de sodium et de potassium.

4. Procédé selon la revendication 1, dans lequel le solvant est séparé de manière continue de l'antisolvant et réinjecté dans le réservoir de préparation à réactif avant que le premier CSTR et l'antisolvant retrouvé soient réinjectés dans l'entrée du dernier CSTR.

5. Procédé selon la revendication 1, dans lequel ledit agent d'étanchéité est du pyrrolidone polyvinylique de différents poids moléculaires dans la plage de 40 000 à 1 300 000.

6. Procédé selon la revendication 1, dans lequel le nombre de CSTR en série est dans la plage allant de 2 à 7.

7. Procédé selon la revendication 1, dans lequel les chambres d'expansion de tous les CSTR en série sont gardées identiques ou varient individuellement entre 10 % à 99 %, de préférence 10 % à 90 % du volume du réacteur pour commander la croissance.

8. Procédé selon la revendication 1, dans lequel ledit antisolvant est choisi parmi le chloroforme, l'acétone ou un mélange de ceux-ci.

9. Procédé selon la revendication 1, dans lequel le diamètre du nanofil en métal est dans la plage de 100 à 200 nm.

10. Procédé selon la revendication 1, dans lequel la longueur du nanofil en métal est dans la plage de 4 à 20 µm.

11. Procédé selon la revendication 1, dans lequel les chambres d'expansion de tous les CSTR sont reliées.
